Europäisches Patentamt

European Patent Office

Office européen des brevets

(19)

(11) **EP 1 205 850 A2**

(12) **EUROPEAN PATENT APPLICATION**

(43) Date of publication:
   **15.05.2002 Bulletin 2002/20**

(51) Int Cl.$^7$: **G06F 17/12**

(21) Application number: **01650033.2**

(22) Date of filing: **30.03.2001**

(84) Designated Contracting States:
   **AT BE CH CY DE DK ES FI FR GB GR IE IT LI LU MC NL PT SE TR**
   Designated Extension States:
   **AL LT LV MK RO SI**

(30) Priority: **10.11.2000 JP 2000349306**

(71) Applicant: **HITACHI EUROPE LIMITED**
   **Maidenhead, Berkshire, SL6 8YA (GB)**

(72) Inventors:
   • **Field, Martyn**
     **Donnycarney, Dublin 5 (IE)**
   • **Ezawa, Yoshitaka, Hitachi Limited**
     **502, Tsuchiura-shi, Ibaraki-ken (JP)**

   • **Ushiro, Yasunori, c/o Hitachi Limited**
     **1, Hadano-shi, Kanagawa-ken (JP)**

(74) Representative: **Schütte, Gearoid**
   **Cruickshank & Co.,**
   **1 Holles Street**
   **Dublin 2 (IE)**

Remarks:
   A request for correction of line 5 on page 8 has been filed pursuant to Rule 88 EPC. A decision on the request will be taken during the proceedings before the Examining Division (Guidelines for Examination in the EPO, A-V, 3.).

(54) **Computing apparatus for solving simultaneous linear equations**

(57)   The invention provides a computing apparatus relative to simultaneous linear equations having a preconditioning process which completes a high-precision calculation in a short time. The computing apparatus includes a data input part into which input information as to a coefficient matrix A of simultaneous linear equations, a preconditioning part which finds a preconditioned matrix C relative to the coefficient matrix A, a computation part which performs a computation by using the inputted coefficient matrix A and the found preconditioned matrix C, and an output part which outputs the computation result. The preconditioning part includes a first processing part which decomposes the coefficient matrix A into submatrices D, a second processing part which calculates norms of the decomposed submatrices D, a third processing part which stores the positions of elements which constitute the one of the submatrices D whose calculated norm is greater than the value of a preset norm, a fourth processing part which adds, to a matrix S formed on the basis of the positions of the stored elements, position information as to matrix elements which change from zero to nonzero when the matrix S is computed, and a fifth processing part which finds the preconditioned matrix C by computing the added matrix.

Fig. 7(A)

EP 1 205 850 A2

**Description**

**Technical Field**

The present invention relates to an apparatus for calculating the numerical solution of simultaneous linear equations and also relates to an apparatus having the process of calculating a preconditioned matrix relative to a coefficient matrix of simultaneous linear equations.

**Prior Art Discussion**

In the literature there is described various methods for the solving of simultaneous linear equations such as a preconditioned conjugate gradient method, a preconditioning (CG) method or a PCG method all of which are discussed in "Supercomputer, Application to Scientific Engineering Calculation" (Maruzen) written by Takero Murata et al.
A conjugate gradient method is based on the fact that the solution of the simultaneous equations Ax = b minimizes the function:

$$f(x) = 1/2(x,Ax) - (x, b),$$

where A represents a known matrix, x represents an unknown vector and b represents a known vector. Actually,

$$f(x + h) = f(x) + (h, Ax - b) + 1/2(h, Ah),$$

and since A is positive definite, (h, Ah)>0. Therefore, for $x^\wedge$ which is the solution of Ax = b,

$$f(x^\wedge + h) > f(x^\wedge),$$

that is, whatever h ($\neq$ 0) may be selected, $f(x^\wedge + h)$ becomes $f(x^\wedge)$, so that $f(x^\wedge)$ becomes a minimum.
The conjugate gradient method is a method of making sequential search for the minimum point of f(x), beginning at an arbitrary initial value $x_0$, and if the k-th approximate value $x_k$ and a search direction $p_k$ are determined,

$$X_{k+1} = x_k + \alpha p_k$$

is obtained, and $\alpha_k$ may be determined so that $f(X_{k+1})$ becomes a minimum.

$$\text{Eq. 1} \qquad f(x_k + \alpha p_k) = \frac{1}{2}\alpha_k^2(p_k, Ap_k) - \alpha_k (p_k, r_k) + f(x_k)$$

Equation (1) is seen as a function of $\alpha_k$ and $\alpha_k$ is determined so that the function becomes a minimum. Then,

$$\text{Eq. 2} \qquad \alpha_k = \frac{(p_k, r_k)}{(p_k, Ap_k)}$$

However, $r_k$ is a residual relative to the k-th approximate solution and is defined in the following manner:

$$r_{k+1} = b - Ax_k.$$

Then, the search direction of the next step is determined by:

$$P_{k+1} = r_{k+1} + \beta_K p_K,$$

where $p_0 = r_0$. Then, as a method of determining $\beta_k$, $\beta_k$ is determined so that $P_{k+1}$ and $Ap_k$ are orthogonal to each other.

$$\text{Eq. 3} \qquad (p_{k+1}, Ap_k) = (r_{k+1} + \beta_k p_k, A_k p_k) = (r_{k+1}, Ap_k) + \beta_k(p_k, Ap_k) = 0$$

From Equation (3),

$$\text{Eq. 4} \qquad \beta_k = -\frac{(r_{k+1}, Ap_k)}{(p_k, Ap_k)}$$

The above is the outline of the conjugate gradient method which is essentially an iterative solution in the sense that the correct solution is obtained from an approximate solution by iterative calculation is called an iterative solution. In contrast, a method of finding a solution by sequentially eliminating the unknowns of simultaneous equations by means of the sum thereof or the difference therebetween is called a direction solution, and a representative example is the Gauss elimination method or the like described, for example, by Takero Murata, Tooru Natori, Satihiko Karaki, in "Large Numerical Simulation", Iwanami Shoten, Publishers.

When the direct method is compared with the iterative solution, the iterative method has the advantage that the required amount of memory is relatively minute compared to that required for a direct solution. However, the iterative solution entails the problem of convergence properties of a solution.

Specifically, in the conjugate gradient method, from the orthogonal properties of $\{r_i\}$, the residual of equations becomes zero in a certain $m \leq n$ (n: size of a matrix A). Specifically, a solution can be found by only n-times iteration. However, since there actually is a round-off error, the solution may not be able to be found by an iteration of n times or less. Specifically, if deformation or stress of a structure is to be found by a finite element method, the material yields or the deformation increases, so that the convergence properties may deteriorate, causing a problem in the application of the conjugate gradient method to simulations.

The speed of convergence of the conjugate gradient method particularly relates to the eigenvalue distribution of A. That is to say, if the eigenvalues of A are redundant, the convergence is fast. Even if the eigenvalues are not completely redundant, if the eigenvalues are concentrated, the convergence becomes fast. The reason for this is as follows. Letting $\lambda_i$ and $v_i$ be the eigenvalues and eigenvectors of A, respectively, an initial residual $r_0$ is assumed to be expanded into the following form by the eigenvectors:

$$\text{Eq. 5} \qquad r_i = \sum_{i=1}^{n} c_i v_i$$

where it is assumed that $(v_i, v_j) = \delta_{ij}$. Here,

$$\text{Eq. 6} \qquad r_1 = r_0 - \alpha_0 Ap_0 = (I - \alpha_0 A)r_0$$

$$\text{Eq. 7} \qquad p_1 = r_1 + \beta_0 p_0 = (I - \alpha_0 A)r_0 + \beta_0 r_0 = [(I + \beta_0)I - \alpha_0 A]r_0$$

$$\text{Eq. 8} \qquad r_2 = r_1 - \alpha_1 Ap_1 = [I - (\alpha_0 + \alpha_1 + \alpha_1 \beta_0)A + \alpha_0 \alpha_1 A^2]r_0$$

Therefore, it is seen that the following equation can be written:

$$r_k = R_k(A)r_0.$$

Thus, $R_0(0) = 1$.

Rewriting of f(x) with the residual gives:

$$f(x) = 1/2(x, Ax) - (x, b)$$

$$= 1/2(r, A^{-1}r) - 1/2(b, A^{-1}b),$$

so that the minimization of f(x) and the manimization of $(r, A^{-1}r)$ are the same. Therefore, the polynomial $R_k(A)$ may be considered to be determined to minimize $(r, A^{-1}r)$ for each k. Namely,

$$\text{Eq. 9} \qquad (r, Ar) = \min_{R_k \in \Pi_k^1} \left( R_k(A)r_0, A^{-1}R_k(A)r_0 \right) = \min_{R_k \in \Pi_k^1} \sum_{i=1}^{n} c_i^2 \lambda_i^{-1} R_k(\lambda_i)^2$$

Here, $\Pi_k^1$ is a set of k-degree polynomials which satisfy $R_k(0) = 1$.
Here,

$$\text{Eq. 10} \qquad r_k = \sum_{i=1}^{n} c_i R_k(\lambda_i) v_i$$

Accordingly, if $\lambda_p, \lambda_{p+1}, ..., \lambda_{p+q}$ are redundant, the dimensions of a space in which $r_k$ can move are reduced by q. Therefore, convergence is reached by only (n-q)-times iteration.
In order to increase the speed of convergence of the conjugate gradient method by using this principle, there is a method which deforms an equation in advance and applies the conjugate gradient method thereto. This method is called a preconditioned conjugate gradient method (PCG method).
Specifically, the PCG method is to select an adequate matrix C near A and apply the conjugate gradient method (CG method) to

$$C^{-1}x = C^{-1}b$$

instead of to Ax = b. If C is near A, $C^{-1}A$ becomes close to a unit matrix and eigenvalues become concentrated, so that convergence to a solution becomes fast.
In the algorithm of an actual PCG method, $C^{-1}A$ is not directly calculated, and the residual vector r is multiplied by $C^{-1}$ in the following manner:

$$\text{Eq. 11} \qquad C^{-1}r \equiv C^{-1}(b-Ax) \equiv C^{-1}b - C^{-1}Ax$$

This is because the direct calculation of $C^{-1}A$ results in the products of a matrix of size n x n and n-cubed products must be calculated, so that the amount of calculation becomes enormous.
Therefore, the algorithm of the PCG method becomes as follows:

(1) Prepare an approximate solution $x_0$ of x;
(2) $r_0 = b - Ax_0$; $p_0 = C^{-1}r_0$; v = 0;
(3)

$$\text{Eq. 12} \qquad \text{while } \|r_v\| > eps * \|b\|$$

(admissible value) do

$$\text{Eq. 13} \qquad \alpha_v = \frac{(p_v, r_v)}{(p_v, Ap_v)} \Rightarrow \alpha_v = \frac{(C^{-1}r_v, r_v)}{(p_v, Ap_v)}$$

or

$$\text{Eq. 14} \qquad x_v = x_v + \alpha_v p_v$$

$$\text{Eq. 15}$$

$$\text{Eq. 16} \qquad \beta_v = -\frac{(C^{-1}r_{v+1}, Ap_v)}{(p_v, Ap_v)} \Rightarrow \beta_v = \frac{(C^{-1}r_{v+1}, r_{v+1})}{(C^{-1}r_v, r_v)}$$

$$\text{Eq. 17} \qquad p_{v+1} = C^{-1}r_{v+1} + \beta_v p_v \; ; \; v = v + 1$$

A representative example of this preconditioned conjugate gradient method is an ICCG method in which Cholesky decomposition which is one kind of triangular decomposition is used in the calculation of $C^{-1}$. This method first applies an incomplete Cholesky decomposition (IC) to the matrix of an equation to be solved, then makes the matrix close to a unit matrix, and subsequently applies the conjugate gradient method (CG method). The triangular decomposition decomposes a matrix A into a product LU (= A) of a lower triangular matrix L where all elements above diagonal entries are zero and an upper triangular matrix U where all elements below diagonal entries are zero. The incomplete triangular decomposition is of the kind in which a nonzero residual R occurs like:

$$A = LU + R.$$

In the incomplete triangular decomposition, the matrix A becomes:

$$A = LL^{-1} + R.$$

In the calculation of the incomplete triangular decomposition, normal Cholesky decomposition procedures are used, but all the Cholesky decomposition procedures are not performed, and appropriate computation reducing techniques are performed. Specifically, $S_A$ is used to denote a set of locations of nonzero elements of A (sparse pattern); that is,

$$S_A = \{(i, j):a_{ij} \neq 0\},$$

and the following set is determined in advance;

$$S \supseteq S_A,$$

and when A is Cholesky-decomposed, only elements present at locations which belong to S among the elements of L and LT are calculated, and the other elements are made zero. This is called the incomplete Cholesky decomposition.
A specific sequence of the incomplete Cholesky decomposition in the ICCG method is as follows:

$$\text{do } i=1,n \quad u_{ii} = a_{ii} - \sum_{k=1}^{i-1} u_{ki}^2 d_k \quad ; \quad d_i = u_{ii}^{-1}$$

$$\text{do } j=i+1,n \quad \text{if} \quad (i,j) \in S \quad \text{then}$$

$$u_{ij} = a_{ij} - \sum_{k=1}^{i-1} u_{ki} d_k u_{kj}$$

$$\text{else} \quad u_{ij} = 0$$

Eq. 18

The problem of this method is that the processing of the incomplete Cholesky decomposition (IC) is difficult to apply to a parallel computer having plural calculation processing devices (processors). Specifically, in the above-described procedures,

$$\text{Eq. 19} \qquad u_{ij} - \sum_{k=1}^{i-1} u_{ki} d_k u_{kj}$$

it is difficult to carry out parallel processing as a calculation in one processor needs a result calculated by another processor. Accordingly, when the number of processors to be used is increased, an increase in data transfer between processors is unavoidable. This leads to the problem that if the number of processors is increased in order to calculate a large-sized coefficient matrix, the calculation time required for data transfer increases and the efficiency of parallelization is not increased. To solve this problem, instead of the CG method, another method such as a method which uses a Bi-CGSTAB (                    ) method which is an iterative solution for an asymmetric matrix has been proposed. The Bi-CGSTAB method is a product iterative method, and its preconditioning can be parallelised by a technique, called a rule shadow, which carries out data transfer only between adjacent processors. However, the Bi-CGSTAB method was originally a technique for an asymmetric matrix, and has the problem that the amount of calculation per iteration is large and the required storage capacity is large. Accordingly, an amount of preconditioning that can cancel an increase in the amount of calculation is needed.

Most of coefficient matrices used in finite element methods are symmetric matrices, and it is desired to develop a preconditioning method capable of realizing parallel processing by using the CG method which is an iterative solution for such a symmetric matrix. A technique developed for this purpose is the FSAI (Factorized Sparse Approximate Inverse) method. This technique was proposed by Kolotilina and Yeremin (Russia, Moscow University), and its details are described in the document "L. Yu. Kolotilina and A. Yu. Yeremin (Russia, Moscow University): Factorized sparse approximate inverse preconditioning I:Theory; SIAM Journal of Matrix Analysis and Applications, 14, pp. 45-58 (1993). This method is as follows: Let $S_L$ be a lower triangular sparse pattern of A (a matrix representative of the locations of nonzero entries of a matrix), which is defined as follows:

$$\text{Eq. 20} \qquad S_L = \{(i,j):a_{ij} \neq 0, i \geq j\}$$

In the sparse pattern $S_L$, specifically, the entries of a matrix S that correspond to the locations of nonzero element of the matrix A are each assigned a numerical value (1 or 0) or a sign indicative of nonzero, while the element of the matrix S that correspond to the locations of zero element of the matrix A are each assigned a numerical value or a sign indicative of zero.

Moreover, elements which are not contained in this sparse pattern $S_L$ are made zero in the following manner and the remaining element are constructed as an N $\times$ N unknown matrix in which x is unknown.

$$\text{Eq. 21} \qquad M_{S_L} = \left\{ X \in \Re^{N \times N} : x_{ij} = 0 \forall (i,j) \notin S_L \right\}$$

Here, consider the following function:

$$\text{Eq. 22} \qquad F(X) \equiv \|I\text{-}XL\|_F^2$$

(Frobenius norm)

By minimizing this function in the following manner, the following sparse approximation of the inverse matrix (Sparse Approximate Inverse) of the lower triangular matrix L in the Cholesky decomposition:

$$\text{Eq. 23} \qquad \tilde{G}(\approx L^{-1})$$

can be found.

$$\text{Eq. 24} \qquad \min_{X \in M_{S_L}} F(X)$$

Here,

$$\text{Eq. 25} \quad F(X) = \|I - XL\|_F^2 = tr\left[(I - XL)(I - XL)^T\right]$$

$$= tr\left[(I - XL)(I - L^T X^T)\right] = N - 2tr(XL) + tr(XKX^T)$$

Then, this is partially differentiated into the following equation by X:

$$\text{Eq. 26} \qquad \frac{\partial F(X)}{\partial X} = 0$$

Thus, the following simultaneous equations:

$$\text{Eq. 27} \qquad \begin{cases} \left(\tilde{G}A\right)_{ij} = 0 & i \neq j, (i,j) \in S_L \\ \qquad = (L)_{ii} & i = j \end{cases}$$

;

can be obtained, but the above equations need the values of the diagonal elements of the matrix L after Cholesky decomposition. Calculation of L is the same as Cholesky decomposition, and does not differ from the use of a normal direct solution. For this reason, instead of the above G~, the matrix $G \in M_{SL}$ defined by the following equations is used:

$$\text{Eq. 28} \qquad \begin{cases} (GA)_{ij} = 0 & i \neq j, (i,j) \in S_L \\ \qquad = 1 & i = j \end{cases}.$$

;

Here, the following diagonal matrix D is introduced:

$$D = \text{Diag}(G).$$

If this D is used, then:

$$\text{Eq.29} \qquad A = LDL^T$$

From Eq. 29,

$$\text{Eq. 30} \qquad A^{-1} = L^{-T}D^{-1}L^{-1}$$

Here,

$$\text{Eq. 31} \qquad A^{-1} \approx G^T D^{-1} G$$

Accordingly,

$$\text{Eq. 32} \qquad G \approx L^1$$

This is used as $C^{-1}$ in the preconditioning $C^{-1}A$. That is to say,

$$\text{Eq. 33} \qquad G^T D^{-1} G \equiv C^{-1}$$

This $C^{-1}$ may be applied to the previously-described preconditioned CG method.
Equations to be solved to find G are:

$$\text{Eq. 34} \qquad \begin{cases} (GA)_{ij} = 0 & i \neq j, (i,j) \in S_L \\ \qquad\quad = 1 & i = j \end{cases}$$

However, letting $g_i$ be a matrix made of nonzero elements in the i-th row of the matrix G, if

$$J_i = \{j:(i, j) \in S_L\} \text{ (size of } n_i:J_i),$$

then

$$GA = I \text{ (I:unit matrix)}$$

becomes

$$\text{Eq. 35} \qquad (GA)^T = I$$

$$\text{Eq. 36} \qquad A^T G^T = I$$

$$\text{Eq. 37} \qquad AG^T = I \ (\because A^T = A)$$

It is seen, therefore, that the vector $g_i$ is a solution of small simultaneous equations of $n_i \times n_i$:

$$A_{Ji}g_i = e_{ni}, \qquad\qquad (1)$$

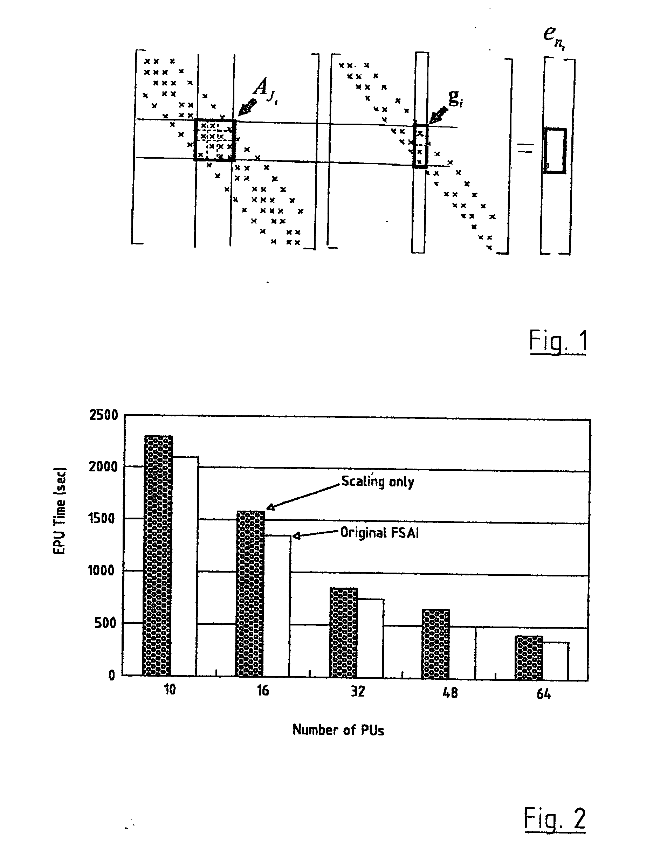

where $A_{Ji}$ represents submatrices of A of $n_i \times n_i$, and $e_{ni}$ represents the vectors in $n_i$-th column of the $n_i \times n_i$ unit matrix. The manner in which these simultaneous equations of $n_i \times n_i$ are formed is shown in Fig. 1. A pair of portions each surrounded by thick lines in Fig. 1 form one equation. Equation (1) is n-number of independent equations, and can be subjected to complete parallel processing without mutual transfer of data among n-number of processors.

The above-described FSAI method can be processed by completely parallel processing, but the problem is how much the effect of preconditioning can be attained from this technique. Fig. 2 shows the result obtained when the FSAI method was applied to the problem of a finite element method structural analysis with 187,280 nodes and 561,840 degrees of freedom. As compared with the case of only processing called scaling which arranges the order of the diagonal entries of the matrix A, the FSAI method can only reduce the period of calculation time by about 10-20 percent, and it cannot be said, therefore, that the effect of preconditioning is satisfactory.

Therefore, the present invention is to provide a computing apparatus relative to simultaneous linear equations having a preconditioning process which completes a high-precision calculation in a short time.

**Summary of the Invention**

According to the present invention, there is provided a computing apparatus for solving simultaneous linear equations having a preconditioning process which completes a high-precision calculation in a short time.

The problems of the above-described preconditioning effect can be solved by the present invention. The effect of preconditioning is determined according to how much fill-in (zero entries change to nonzero entries) is to be allowed during the calculation of the preconditioned matrix $C^{-1}$. Allowing all fill-in elements is equivalent to complete triangular decomposition, and is the same as the execution of a direct solution. Contrarily, if allowance for fill-in is made excessively small, the calculation time required for preconditioning becomes short, but the effect of preconditioning becomes small.

In one embodiment of the present invention, there is provided a computing apparatus for solving simultaneous linear equations, the present invention includes data input means into which input information as to a coefficient matrix A of simultaneous linear equations, preconditioning means which finds a preconditioned matrix C relative to the coefficient matrix A, computation means which solves the simultaneous linear equations by using the inputted coefficient matrix A and values of the found preconditioned matrix C, and output means which outputs the computation result, and the preconditioning means includes a first processing means which decomposes the coefficient matrix A into submatrices D, a second processing means which calculates norms of the decomposed submatrices D, a third processing means which stores the positions of elements which constitute the one of the submatrices D whose calculated norm is greater than the value of a preset norm, a fourth processing means which adds, to a matrix S formed on the basis of the positions of the stored elements, position information as to matrix elements which change from zero to nonzero when the matrix S is computed, and a fifth processing means which finds the preconditioned matrix C by computing the added matrix.

In another embodiment, there is provided a computing apparatus for solving simultaneous linear equations according to the present invention includes a data input means into which input information as to a coefficient matrix A of simultaneous linear equations, preconditioning means which finds an approximate matrix $C^{-1}$ of the inverse matrix of the coefficient matrix A, computation means which solves the simultaneous linear equations by using the inputted coefficient matrix A and the found approximate matrix $C^{-1}$, and an output part which outputs the computation result, and the preconditioning means may include a first computation means which deletes elements whose computed values are smaller than a previously stored set value, from submatrices D which constitute the matrix of the coefficient matrix A, and forms a sparse pattern equivalent to a second matrix, a second computation means which adds, to the sparse pattern, elements which change from zero to nonzero when the second matrix is computed, and forms a second sparse pattern, and a third computation means which finds the approximate matrix $C^{-1}$ by using the second sparse pattern.

In a further embodiment, there is provided a computing apparatus for solving simultaneous linear equations according to the present invention is an apparatus which calculates a preconditioned matrix C relative to a coefficient matrix A of simultaneous linear equations, and the apparatus may include means for storing the coefficient matrix A, the resultant preconditioned matrix C and intermediate calculation results, means for decomposing the coefficient matrix A into a set of submatrices D while referring to the storage means, calculating norms from elements of the submatrices D and storing the positions of only submatrices whose calculated norms are greater than a preset value, means for calculating the positions of the elements of the submatrices D that change from zero to nonzero by the influence of originally nonzero elements in the case of performing triangular decomposition to decompose a matrix S indicative of the positions into the product of a lower triangular matrix L where elements above diagonal entries are zero and an upper triangular matrix U where elements below diagonal entries are zero, and storing a result obtained by adding the position information as to the elements of the submatrices D to the matrix S indicative of the positions, and processing means for performing incomplete triangular decomposition by using a nonzero submatrix indicated by a matrix S' indicative of positions which reflect the added result.

Moreover, for example, in the sequence of calculating a matrix C' in which only elements that correspond to position information S from among all the elements of a coefficient matrix A of simultaneous linear equations are left and the other elements are made zero is formed on the basis of position information S stored in a storage device, and the matrix A' is multiplied from its right-hand side by a row vector $g_i$ which corresponds to the i-th row of an unknown matrix G in which all the elements other than those corresponding to the position information S are made zero, and the result vector is placed on the left-hand side of an equation, while a vector in which 1s are placed in the i-th row and the other rows are made zero is placed on the right-hand side of the equation. This equation is solved by separate processors for the respective i rows, and the results are collected in one processor to determine an unknown matrix G. A preconditioned matrix C can be obtained by regarding this G as an approximate value of the inverse matrix of a lower triangular matrix in the triangular decomposition of the coefficient matrix A.

In the computing apparatus relative to simultaneous linear equations, the size of the submatrix D is preferably selected from among $1 \times 1$, $2 \times 2$ and $3 \times 3$. In the case where data to be calculated is three-dimensional or information as to the coefficient matrix A is associated with three-dimensional matter, it is preferable to select the above $3 \times 3$. In the case where data to be calculated is two-dimensional or information as to the coefficient matrix A is associated with two-dimensional matter, it is preferable to select the above $2 \times 2$.

In the above-described computing apparatus relative to simultaneous linear equations, the set value relative to the submatrices D may be 0.05 or more and 0.25 or less.

In addition, for example, specifically, in the case where equations to be solved represent the relationship between displacements of a three-dimensional structure and forces, a norm reference value for extracting norms equal to or greater than a constant value or more from the norms calculated from the elements of the submatrices D may preferably be made 0.1 or more and 0.2 or less so that far higher calculation speeds can be achieved.

In the above-described invention, the simultaneous equations are characterised by simultaneous linear equations formed in numerical simulation based on a finite element method, or simultaneous linear equations formed in numerical simulation based on a difference method.

Another aspect of the present invention provides a computer-readable recording medium on which is recorded a program which executes a preconditioning step of finding a preconditioned matrix C relative to a coefficient matrix A of inputted simultaneous linear equations on the basis of data as to the coefficient matrix A, a computation step of solving the simultaneous linear equations by using the inputted coefficient matrix A and values of the found preconditioned matrix C, and an output step of outputting the computation result, and the preconditioning step executes a step of decomposing the coefficient matrix A into submatrices D, a step of calculating norms of the decomposed submatrices D, a step of storing the positions of elements which constitute the one of the submatrices D whose calculated norm is greater than the value of a preset norm, a step of adding, to a matrix S formed on the basis of the positions of the stored elements, position information as to matrix elements which change from zero to nonzero when the matrix S is computed, and a step of finding the preconditioned matrix C by computing the added matrix.

Another aspect of the present invention provides a data processing method which includes a preconditioning step of finding a preconditioned matrix C relative to a coefficient matrix A of inputted simultaneous linear equations on the basis of data as to the coefficient matrix A, a computation step of solving the simultaneous linear equations by using the inputted coefficient matrix A and values of the found preconditioned matrix C, and an output step of outputting the computation result, and the preconditioning step includes a step of decomposing the coefficient matrix A into submatrices D, a step of calculating norms of the decomposed submatrices D, a step of storing the positions of elements which constitute the one of the submatrices D whose calculated norm is greater than the value of a preset norm, a step of adding, to a matrix S formed on the basis of the positions of the stored elements, position information as to matrix elements which change from zero to nonzero when the matrix S is computed, and a step of finding the preconditioned matrix C by computing the added matrix.

## Brief Description of the Drawings

The invention will be more clearly understood by the following description of some embodiments thereof, given by way of example only, with reference to the accompanying drawings, in which:-

Fig. 1 is an explanatory view showing the generation of equations for calculating a sparse approximation of the inverse matrix of a lower triangular matrix L;

Fig. 2 is a view showing a comparison between calculation times;

Fig. 3 is a schematic view showing the flowchart of forming a sparse pattern according to one embodiment of the present invention;

Fig. 4 is a schematic view showing the status of load sharing in a parallel computer according to the one embodiment of the present invention;

Fig. 5 is a schematic view showing a comparison among calculation times for different admissible values (15,492 degrees of freedom);

Fig. 6 is a schematic view showing a comparison among calculation times for different admissible values (69,579 degrees of freedom);

Fig. 7 is a schematic view of the one embodiment of the present invention;

Fig. 8 is a schematic view of the flowchart of the one embodiment of the present invention;

Fig. 9 is a schematic view of a method of loading a program according to the one embodiment of the present invention;

Fig. 10 is an explanatory view of domain division;

Fig. 11 is an explanatory view of domain division;

Fig. 12 is a schematic view of the distribution of processing among processors according to the one embodiment of the present invention;

Fig. 13 is a schematic view of the flowchart of a temperature distribution analysis system using a difference method according to the one embodiment of the present invention;

Fig. 14 is a schematic view of the nonzero pattern of an equation in temperature distribution analysis using the difference method according to the one embodiment of the present invention;

Fig. 15 is a schematic view of the flowchart of forming a sparse pattern according to the one embodiment of the present invention; and

Fig. 16 is a schematic view showing a comparison in calculation time between a prior art method and the one embodiment of the present invention.

## Detailed Description of the Invention

Referring now to the invention and initially to a general implementation of the invention, the contents of the way to determine the improved sparse pattern $S_L$ according to the present invention when the above-described FSAI method is used will be described below in detail in conjunction with each of the following steps:

(1) First Step: A matrix from which small-value coefficients are deleted is formed, and its sparse pattern is formed.

(2) Second Step: Fill-in allowed during the triangular decomposition of the matrix is added to the sparse pattern. At this time, in order to reduce calculation time, the fill-in is restricted to only primary fill-in, i.e., nonzero elements which are initially zero in themselves and are generated from originally nonzero elements by computation.

(3) Third Step: The sparse pattern generated in the above step is used to apply the FSAI method.

In the prior-art FSAI method, the nonzero pattern of a stiffness matrix K is used without modification.

$$S_L = \{(i, j) : k_{ij} \neq 0, i = j\}.$$

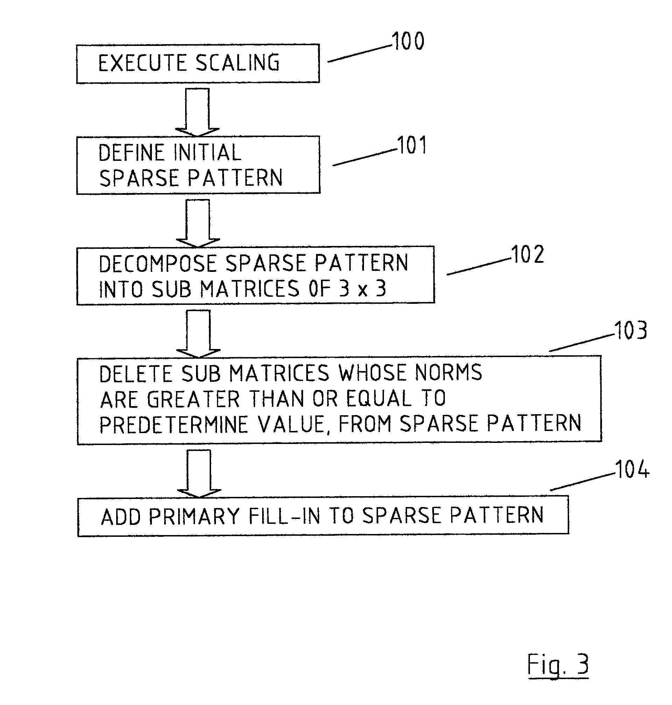

Referring to Fig. 3, in step 100, to reduce the number of iterations for convergence, the number of nonzero entries may be increased. However, since a simple increase results in an increase in calculation time for preconditioning, balance must be considered. The problem of the above equation is that fill-in which occurs during LDLT decomposition is ignored. This seems to be why the effect of preconditioning is small. For this reason, it may be considered that entries which become nonzero in fill-in are added to the sparse pattern.

In step 101, there are plural kinds of fill-in such as fill-in (called primary fill-in) which becomes nonzero by the influence of originally nonzero entries and fill-in (called secondary fill-in) which occurs by the influence of the primary fill-in. If all kinds of fill-in are contained, the result is substantially the same as the direct method as described previously. For this reason, in the present invention, only primary fill-in is considered.

In step 102, to avoid consideration of waste fill-in as completely as possible, small-value entries are ignored. Here, in the analysis of three-dimension structures, since the degree of freedom of one node is 3 (in the case of a shell element, a twofold value, i.e., 6), the deletion of small elements from the stiffness matrix is carried out in units of a 3 $\times$ 3 submatrix. Specifically, first, an global stiffness matrix A is scaled. For example,

$$\text{Eq. 38} \qquad \begin{bmatrix} a_{11} & a_{12} & a_{13} \\ a_{21} & a_{22} & a_{23} \\ a_{31} & a_{32} & a_{33} \end{bmatrix} \begin{Bmatrix} x_1 \\ x_2 \\ x_1 \end{Bmatrix} = \begin{Bmatrix} b_1 \\ b_2 \\ b_3 \end{Bmatrix}$$

is scaled in the following manner:

$$\text{Eq. 39} \qquad \begin{bmatrix} 1 & a_{12}/\sqrt{a_{11}a_{22}} & a_{13}/\sqrt{a_{11}a_{33}} \\ a_{21}/\sqrt{a_{11}a_{22}} & 1 & a_{23}/\sqrt{a_{22}a_{33}} \\ a_{31}/\sqrt{a_{11}a_{33}} & a_{32}/\sqrt{a_{22}a_{33}} & 1 \end{bmatrix} \begin{Bmatrix} a_1\sqrt{a_{11}} \\ a_2\sqrt{a_{22}} \\ a_3\sqrt{a_{33}} \end{Bmatrix} = \begin{Bmatrix} b_1/\sqrt{a_{11}} \\ b_2/\sqrt{a_{22}} \\ b_3/\sqrt{a_{33}} \end{Bmatrix}$$

Then, the matrix is divided in units of 3 rows and 3 columns and is changed to a set of 3 $\times$ 3 submatrices A$\sim$.

In step 103, the norms of elements of each of these individual submatrices A$\sim$ are calculated, that is,

$$\text{Eq. 40} \qquad \|\tilde{A}\| \equiv \sqrt{a_{ij}a_{ij}}$$

However, in the above equation, Einstein's convention is employed. Accordingly, if A$\sim$ is a unit matrix,

$$\text{Eq. 41} \qquad \|\tilde{A}\| = \sqrt{3}$$

is obtained.

Here, an admissible value $\varepsilon$ is determined, and K$\sim$ below this value is eliminated from the sparse pattern $S_L$. Let $\text{Stol}_L$ be the resultant sparse pattern.

In step 104, addition of the primary fill-in is performed.

This addition may be performed in the following manner.

$$\text{Eq. 42} \qquad (i,j) \in S_L^{ext} \text{ if } \begin{cases} (i,j) \in S_L^{tol} \\ \exists 1 \le k \le j \text{ such that } (i,k) \in S_L^{tol} \text{ and } (j,k) \in S_L^{tol} \\ \exists j \le k \le i \text{ such that } (i,k) \in S_L^{tol} \text{ and } (k,j) \in S_L^{tol} \end{cases}$$

The sparse pattern $\text{Stol}_L$ determined in this manner is used in place of the sparse pattern $S_L$ to apply the FSAI method.

Specifically, a matrix A in which only elements that correspond to position information S from among all the elements of a coefficient matrix A of simultaneous equations are left and the other elements are made zero is formed on the basis of this sparse pattern $Stol_L$ and is stored in a storage device. A matrix A' is multiplied from its right-hand side by a row vector $g_i$ which corresponds to the i-th row of an unknown matrix G in which all the elements other than those corresponding to the position information S are made zero, and the result vector is placed on the left-hand side of the following equation, while a vector in which 1s are placed in the i-th row and the other rows are made zero is placed on the right-hand side of the following equation:

$$A'g_i = I_i.$$

This equation is solved by separate processors for individual rows, and the results are collected in one processor

Eq. 43

$$[G] = \begin{Bmatrix} g_1 \\ g_2 \\ \vdots \\ g_n \end{Bmatrix}$$

(row vector)

From the above, the unknown matrix G is determined, and the following equation is obtained by regarding this G as an approximate value of the inverse matrix of a lower triangular matrix obtained from the triangular decomposition of the coefficient matrix A:

$$\text{Eq. 44} \qquad G^T D^{-1} G \equiv C^{-1}$$

and a preconditioned matrix C is calculated from the above. This C is stored in a storage device of a parent processor. Then, the parent processor calculates this C, beginning at the algorithm of the following preconditioned conjugate gradient method:

(1) Prepare an approximate solution $x_0$ of x;
(2) $r_0 = b - Ax_0$; $p_0 = C^{-1}r_0$; $v = 0$;
(3)

$$\text{Eq. 45} \qquad \text{while } \|r_v\| > eps * \|b\|$$

(admissible value) do

$$\text{Eq. 46} \qquad \alpha_v = \frac{(p_v, r_v)}{(p_v, Ap_v)} \Rightarrow \alpha_v = \frac{(C^{-1}r_v, r_v)}{(p_v, Ap_v)}$$

or

$$\text{Eq. 47} \qquad x_v = x_v + \alpha_v p_v$$

$$\text{Eq. 48} \qquad r_{v+1} = r_v - \alpha_v Ap_v$$

$$\text{Eq. 49} \qquad \beta_v = -\frac{(C^{-1}r_{v+1}, Ap_v)}{(p_v, Ap_v)} => \beta_v = \frac{(C^{-1}r_{v+1}, r_{v+1})}{(C^{-1}r_v, r_v)}$$

or

$$\text{Eq. 50} \qquad p_{v+1} = C^{-1}r_{v+1} + \beta_v p_v \; ; \; v = v + 1$$

In these calculations, $Ap_v$ makes use of the fact that A is the sum of coefficient matrices of subdomains present on the memory of each child processor. The calculations of the coefficient matrices of the respective subdomains are performed by the respective processors, and the results of the calculations are transferred to the parent processor. The parent processor performs the above calculations by using the results of $Ap_v$ sent from the child processors.

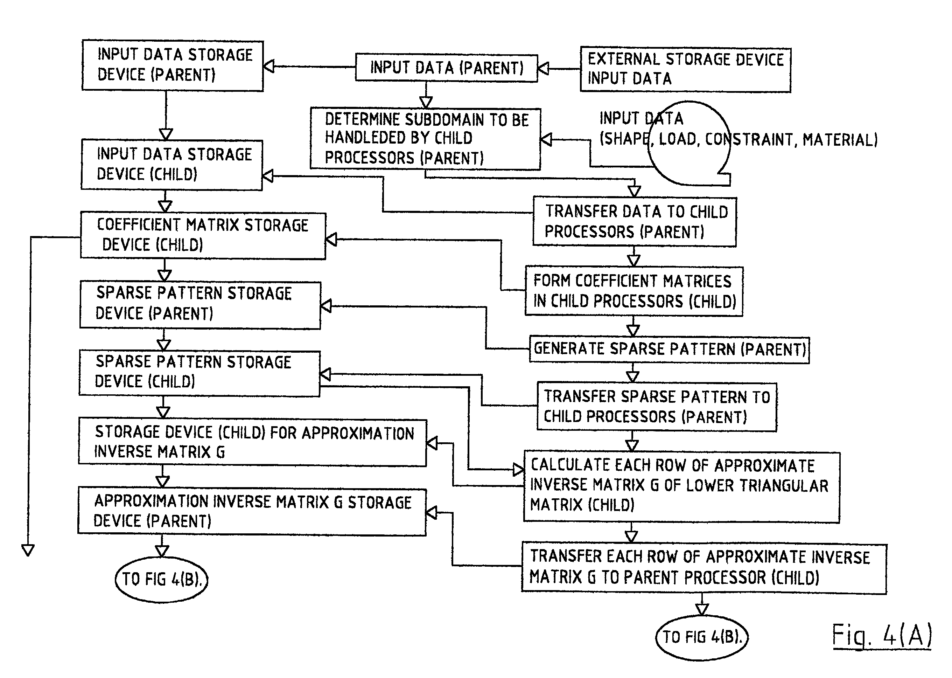

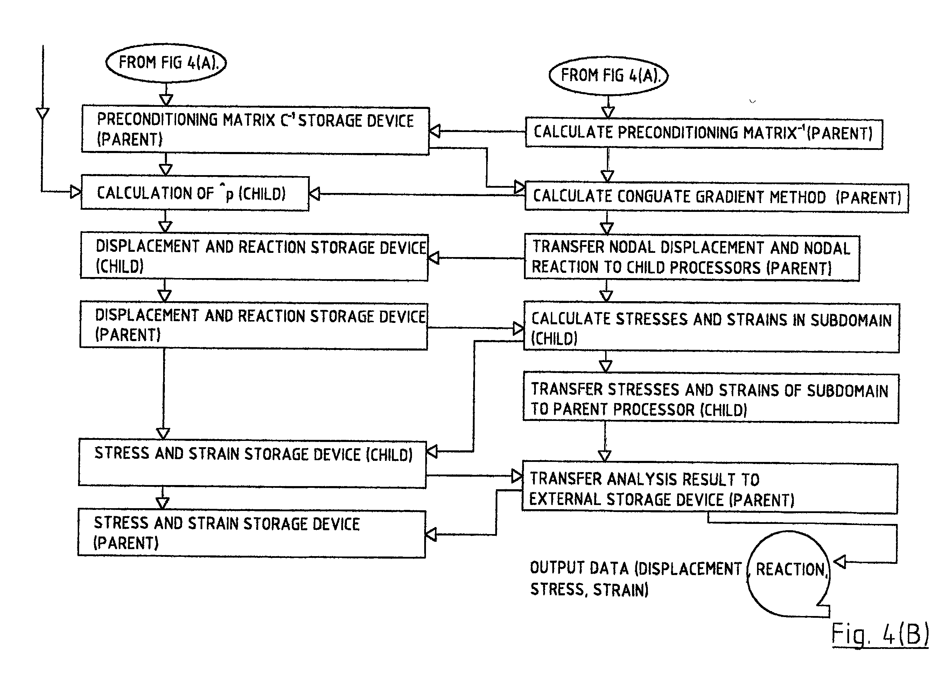

The above process is shown in Fig. 4(a) and Fig. 4(b).

Here, the problem of how to determine the admissible value ε arises. To cope with this problem, comparison of calculation time was performed on several examples for different ε.

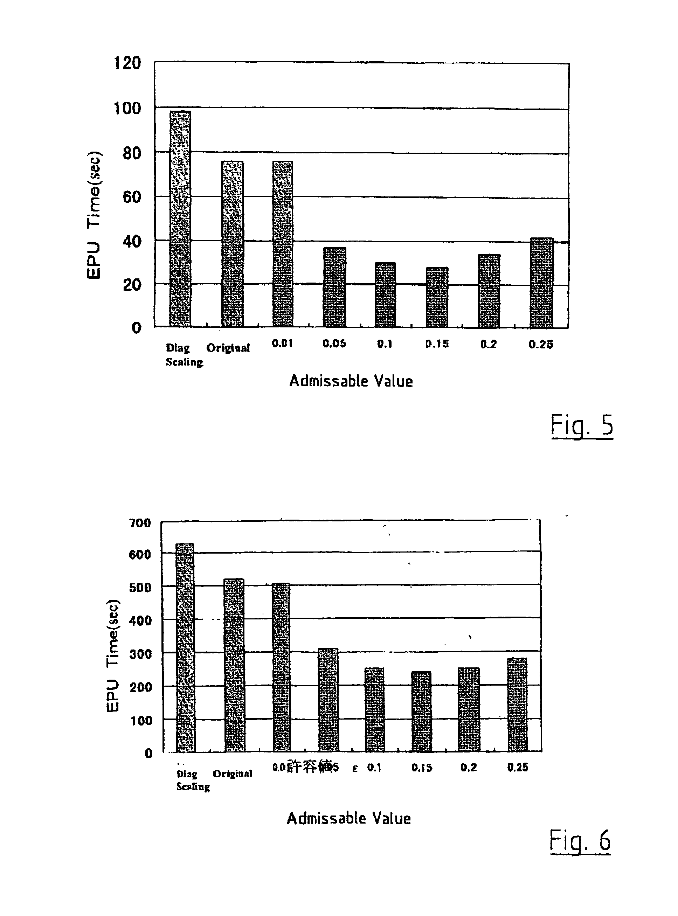

Fig. 5 shows the case of application to a comparatively small thermal stress analysis problem of 15,492 degrees of freedom by a finite element method. Fig. 6 shows the case of a larger thermal stress analysis problem of 69,579 degrees of freedom. In both cases, when the admissible value ε is between 0.1 and 0.2, the calculation time is a minimum. As the admissible value ε is made smaller, the amount of calculation required for preconditioning becomes smaller, but the effect of preconditioning becomes smaller and the required number of iterations increases. Contrarily, as the admissible value ε is made larger, the effect of preconditioning becomes larger, but the amount of calculation required for preconditioning increases. For this reason, such minimal value occurs. Accordingly, from this numerical experiment, 0.1 or more and 0.2 or less are adopted as standard values. However, in the case where the value of the determinant of a coefficient matrix to be solved is close to zero, since convergence is difficult to attain by an iterative method, it may also be considered that convergence properties are improved by increasing the admissible value ε.

A preferred embodiment for carrying out the present invention is described below.

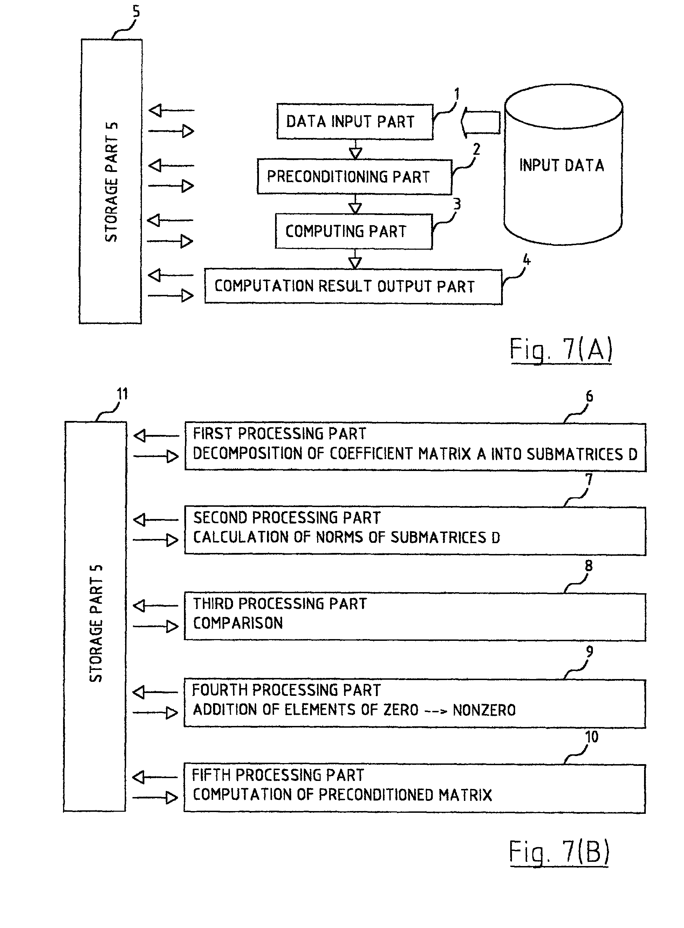

Fig. 7 shows the outline of a computing apparatus of the present invention. Fig. 7(a) shows the outline, while Fig. 7(b) shows the contents of the preconditioning part shown in Fig. 7(a). The computing apparatus of the invention of the present application can be used as a computer for performing finite element method simulations or the like on three- or two-dimensional stress, the state of deformation, temperature or other state variations. Of course, the present computing apparatus can be applied to any other event that can be solved by using simultaneous linear equations.

As shown in Fig. 7(a), the computing apparatus according to one embodiment of the present invention includes a data input part 1 into which input information as to a coefficient matrix A of simultaneous linear equations, a preconditioning part 2 which finds a preconditioned matrix C relative to the coefficient matrix A, a computation part 3 which solves the simultaneous linear equations by using the inputted coefficient matrix A and values of the found preconditioned matrix C, and an output part 4 which outputs the computation result.

As shown, the computation result in each step is temporarily stored in a storage part 5, and it is preferable that when the stored information is to be used in the next step, the information be called from the storage part.

As shown in Fig. 7(b), first of all, in the preconditioning part, data inputted to the data input part is read from the storage part, and in a first processing part 6, a coefficient matrix A is decomposed into submatrices D. Then, in a second processing part 7, calculation is performed on norms of the submatrices D decomposed in the first processing part. Then, in a third processing part 8, a comparison is made between the values of the norms of the submatrices D calculated in the second processing part and the set value of a norm stored in the storage part. Moreover, the positions of elements which constitute the one of the submatrices D whose norm calculated in the second processing part is greater than the value of the set value of the norm are stored. Then, in a fourth processing part 9, position information as to matrix elements which change from zero to nonzero when a matrix S formed on the basis of the positions of the stored elements by the processing of the third processing part is added to the matrix S. Then, in a fifth processing part 10, the matrix added in the fourth processing part is computed to find the preconditioned matrix C. Subsequently, the preconditioned matrix C is stored in the storage part.

As described above in Fig. 7(a), in the case of Fig. 7(b) as well, the computation result in each of the processing parts is temporarily stored in the storage part, and it is preferable that when the stored information is to be used in the next step, the information be called from the storage part.

According to this construction, since a calculation target is restricted so that calculation is completed in a short time with a decrease in accuracy being restrained, it is possible to provide a computing apparatus capable of performing high-precision calculation in a short time.

A second example of the one embodiment of the invention of the present application will be described below.

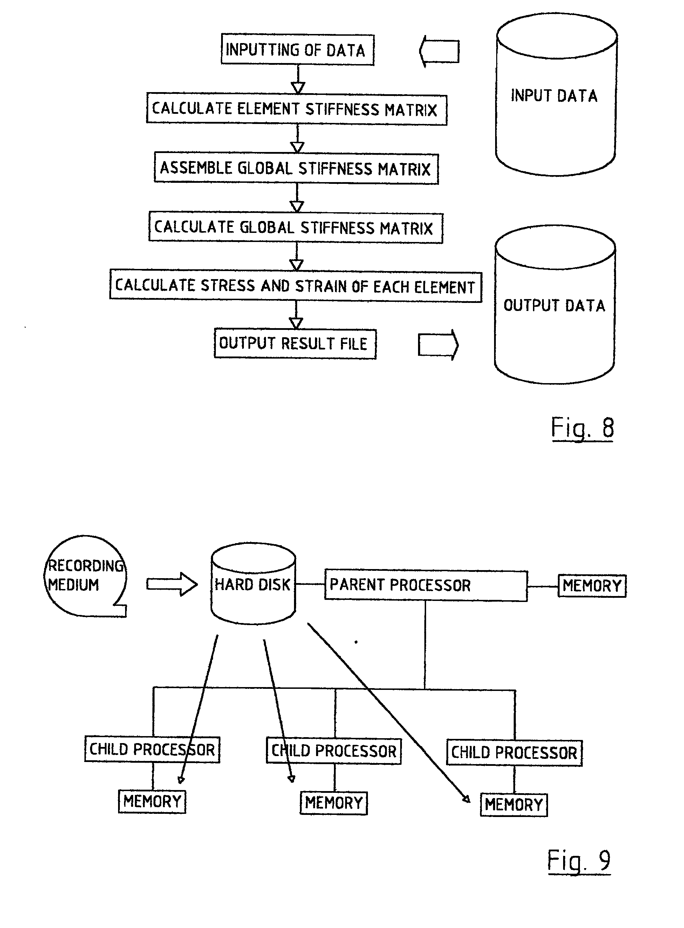

Fig. 8 is a flowchart of a system which simulates stresses and the state of deformation of a three-dimensional structure by a finite element method by means of a parallel computer. The program is normally sold in the state of being stored on a recording medium such as a CD-ROM, magnetic tape, a floppy disk or an MO disk, as shown in Fig. 9, and the program is installed on a hard disk before it is used. When activated, the program installed on the hard disk is loaded into the memory of each of processors. The same program is distributed to the memory of each of the processors. However, in actual operation, the program distributed to each of the processors detects the number of a processor in which the program itself is present, and performs a unique operation according to the processor number.

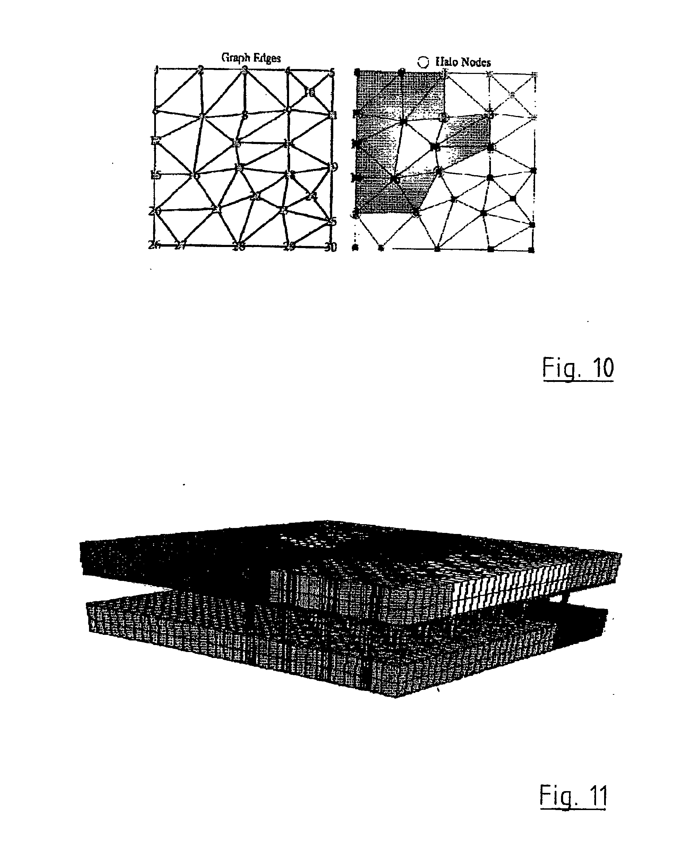

How to distribute loading among plural processors will be described below with reference to Fig. 10.

First of all, the entire area shown on the left-hand side of Fig. 10 is divided into plural subdomains to be handled by the respective processors. In this case, two dividing methods can be considered, one of which divides the entire area so that each of the subdomains has as equal a number of nodes as possible, and the other of which divides the entire area so that each of the subdomains has an equal number of elements. In stress analysis using a finite element method, it is general that the greater part of calculation time is occupied not by the time required for element generation but by the time required to solve simultaneous equations. For this reason, such domain division is carried out on the basis of the number of nodes so that the loads of the respective processors can be made as equal as possible. Each of the processors generates an element stiffness matrix of its subdomain. A problem arising in this case is elements which overlap adjacent subdomains, but each of the processors also has information as to nodes which constitute such boundary elements, and generates a stiffness matrix of the elements of the boundary portion. The right-hand side of Fig. 10 shows a division example, and portions of the same darkness are handled by one processor.

Fig. 11 shows an example of domain division of an analysis model of an actual product. Individual portions shaded with different darknesses are handled by the corresponding processors, respectively.

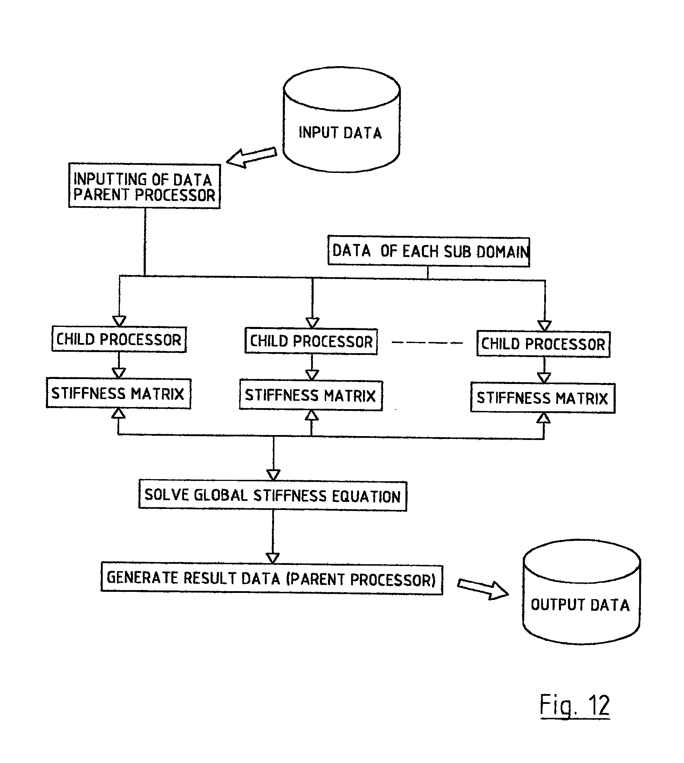

As shown in Fig. 12, the program loaded into a memory of a parent processor reads in an input data file placed on a hard disk. The input data contains data such as shape data, property data and load data as to a structure to be simulated, as well as data for dividing the structure into plural small domains (finite elements). Then, data as to the divided subdomains are transferred to the corresponding child processors, respectively.

The program on each of the processors uses the input data to form the following relation (element stiffness matrix) indicative of the relationship between displacements and loads of finite elements in the corresponding subdomain:

$$[A_e]\{u\} = \{f\},$$

where $\{u\}$ represents the displacement at a node which constitutes an element, and $\{f\}$ represents the load at the node. Then, the relations as to the respective elements are connected to assemble the following relation indicative of a global structure (global stiffness matrix):

$$[A]\{u\} = \{f\}.$$

The present invention is applied to the step of solving this global stiffness equation. The global stiffness matrix is divided into submatrices each made of 3 rows and 3 columns, and a norm is calculated for each of the $3 \times 3$ submatrices and submatrices whose norms are 0.15 or less are deleted. Then, a sparse pattern is formed from the positions of the remaining nonzero elements. Then, the primary fill-in is calculated from the undeleted matrices, and the positions of the fill-in are added to the sparse pattern. $Stol_L$ determined in this manner is used to solve:

Eq. 51
$$\begin{cases} (GA)_{ij} = 0 & i \neq j, (i,j) \in S_L \\ \phantom{(GA)_{ij}} = 1 & i = j \end{cases}$$

Specifically, letting $g_i$ be a vector made of only nonzero elements in the i-th row of the matrix G, the vector $g_i$ is found as a solution of small simultaneous equations of $n_i \times n_i$:

$$A_{Ji}g_i = e_{ni}, \tag{1}$$

where $A_{Ji}$ represents submatrices of A of $n_i \times n_i$, and $e_{ni}$ represents the vectors in $n_i$-th column of the $n_i \times n_i$ unit matrix.

The n-number of independent equations (1) can be completely solved in parallel. In addition, since these equations in general are of very small size as can be seen from Fig. 1, they can be solved with a small amount of calculation. For example, they may be solved by a direct method such as the Gauss elimination method. In addition, although the ICCG method suffers the problem of accumulation of round-off errors in preconditioning, the present technique has the advantage that since $A_{ji}$ is small in size and can be independently calculated, accumulation of round-off errors does not easily occur in preconditioning. Since matrices which are disadvantageous in the number of conditions are easily influenced by round-off errors, the present technique is superior to the ICCG method in this respect as well.

When a parent processor confirms that the stiffness matrices have been generated by child processors, the parent initiates finding the solution of a global stiffness equation. However, in this case, the parent processor does not actually assemble a global stiffness matrix [A]. In the calculation procedure of the conjugate gradient method, since [A] of the following calculation portion to which the global stiffness matrix [A] relates:

$$[A]\{p_v\}$$

is the sum of stiffness matrices $[A_i]$ of the subdomains, the following relation is formed:

$$[A]\{p_v\} \equiv ([A_1] + [A_2] + \cdots + [A_k])\{p_v\} \text{ (k: number of subdomains)}$$

$$= [A_1]\{p_{v1}\} + [A_1]\{p_{v1}\} + \cdots + [A_k])\{p_{vk}\},$$

and each of the processors calculates $[A_i]\{p_v\}$ and transfers the resultant vector to the parent processor. Owing to this process, calculations and memories can be allotted among the child processors. The equation $A_{Ji}g_i = e_{ni}$ for calculating a preconditioning matrix C is similarly allotted among and calculated by the child processors. The parent processor collects the results calculated by the child processors and performs calculations based on the conjugate gradient method. The nodal displacements and the nodal loads collected by the parent processor in this manner are sent back to the child processors responsible for the respective domains to which the corresponding nodes belong. Each of the child processors calculates the stresses and strains of finite elements of the corresponding domain by using the sent nodal displacement data and nodal load data. The calculation results are again sent back to the parent processor. The parent processor combines the collected stress and strain data with the nodal displacement data and nodal load data owned by the parent processor itself, and forms an output data file and outputs the file to the hard disk. This manner is similar to that shown in Fig. 4 mentioned previously.

A third example of the one embodiment of the present invention will be described below.

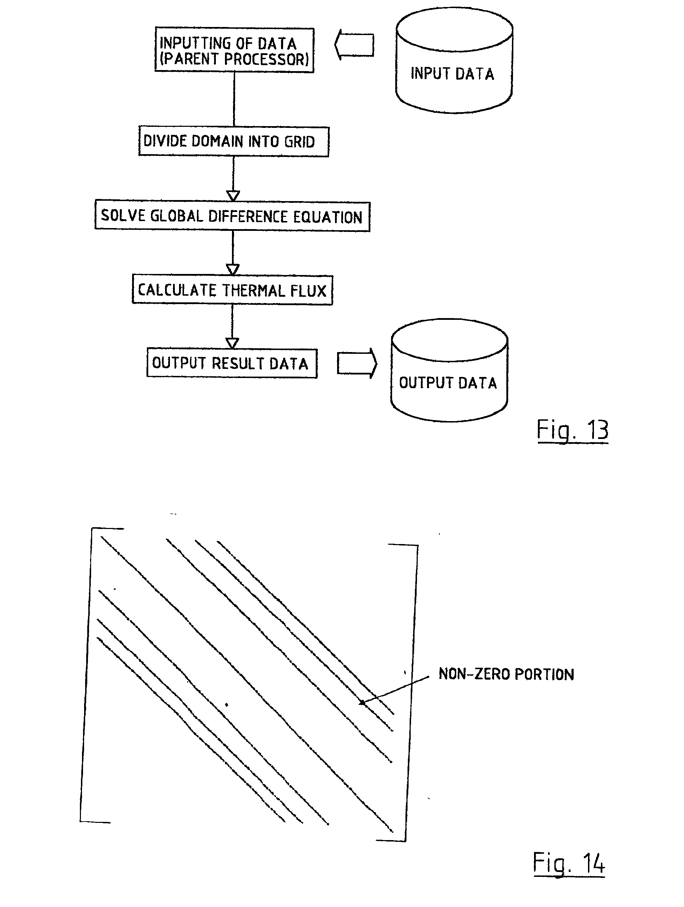

Fig. 13 is a flowchart of a difference-method structural analysis program which operates on a parallel computer. This is an example in which a temperature distribution is solved by a difference method. First, a domain whose temperature distribution is to be found is divided into a square grid. Then, a dominant equation is transformed into difference equations between grids, and these are connected over the entire domain. Finally, the following difference equation is obtained:

$$[K]\{\theta\} = \{q\},$$

where $\{\theta\}$ is the temperature at a grid point and $\{q\}$ is the heat flux passing through the grid point.

In the matrix [K], in general, nonzero entries appear in parallel with a diagonal as shown in Fig. 14. In the case where the temperature distribution is to be simulated, the degree of freedom of one grid point is 1. The degree of freedom of a node is 3 in the simulation for finding the stresses and displacements of a structure, but since the degree of freedom in this case is 1, elimination of initial small elements from a sparse pattern is carried out not in units of a $3 \times 3$ submatrix but on the basis of the sizes of the elements themselves. Therefore, the sequence of the process is as follows. (1) The matrix is scaled by dividing each row and each column of the matrix by the size of each diagonal entry. (2) A sparse pattern in which the elements of the matrix that are less than or equal to a predetermined value are eliminated is formed. The predetermined value is set between 0 and 1. (3) Primary fill-in is calculated from the remaining elements, and is added to the sparse pattern. (4) The sparse approximation G~ of the inverse matrix (Sparse Approximate Inverse) of a lower triangular matrix L in the Cholesky decomposition is calculated in parallel by a parallel computer with the FSAI method. (5) This G~ is used to apply the preconditioned conjugate gradient method.

Since the temperatures at the respective grid points are found in this manner, a parent processor transfers the results to child processors responsible for the respective subdomains. The child processors calculates thermal fluxes difference grids from the values. The parent processor collects the thus-obtained thermal fluxes to form one file, and outputs the file to a hard disk.

A fourth example of the one embodiment of the present invention will be described below.

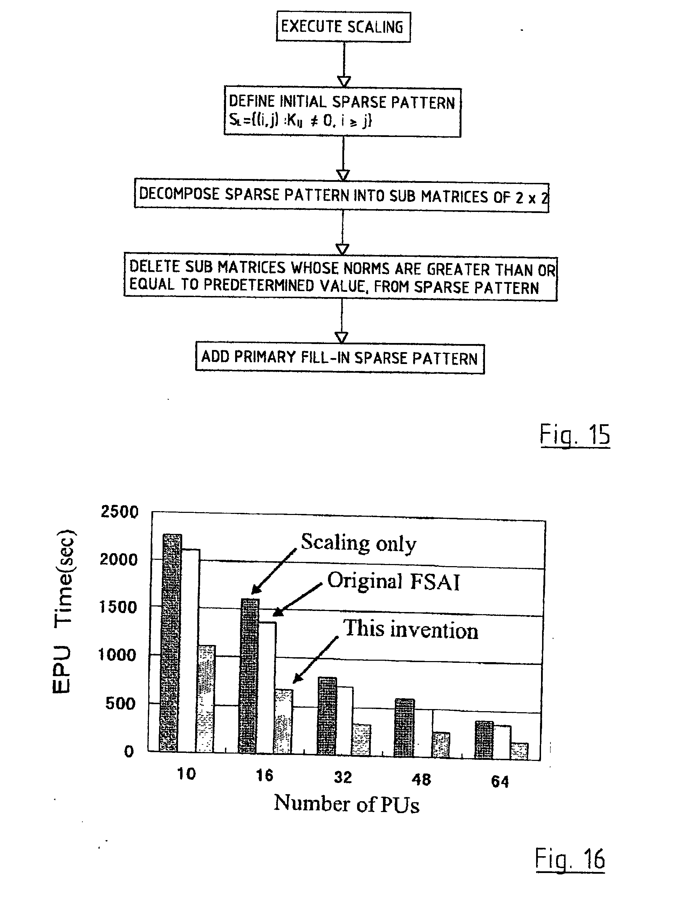

In the case of simulating the stresses and displacements of a two-dimensional structure which is in a plane stress state (stress perpendicular to the plane of a sheet is zero) or a plane strain state (strain perpendicular to the plane of the sheet is zero), the flowchart is identical to the case of Embodiment 1 shown in Fig. 8. A process following that flowchart is also basically identical, but although the degree of freedom of each node in Embodiment 1 of the three-dimensional structure is 3, in the present embodiment, the degree of freedom is 2 and the flowchart is as shown in Fig. 15. Specifically, a global stiffness matrix is divided in units of 2 rows and 2 columns to form submatrices of size $2 \times 2$. In deletion of submatrices, a decision reference value is set between 0 and 2 and submatrices whose norms are less than or equal to the decision reference value are deleted from the sparse pattern. Then, the position of primary fill-in is calculated, and is added to the sparse pattern. This sparse pattern is used to calculate in parallel the sparse approximation G~ of the inverse matrix of a lower triangular matrix L in the Cholesky decomposition by means of a parallel computer. This G~ is used to apply the preconditioned conjugate gradient method.

The result obtained when the advantage of the one embodiment of the present invention (by way of example, the second example) is applied to the problem of a finite element method structural analysis of 187,280 nodes and 561,840 degrees of freedom as in the case of Fig. 2 is shown in Fig. 16. Here, the admissible value $\varepsilon$ is 0.15. It is seen from this figure that the use of the new sparse pattern can realize an about 1/2 calculation time compared to the case of only prior-art scaling and the original FSAI method.

If the present invention is used, far faster simulations can be realized even with the same parallel computer. In addition, when a simulation is performed with a massively parallel computer made of a large number of processors, an increase in the number of data transfers among the processors becomes a problem. However, in the present invention, since calculations of preconditioned matrices can be performed completely in parallel, there is no need for data transfer among the processors during calculations of preconditioned matrices, so that far higher speeds can be expected even in massively parallel computers.

In addition, because the effect of preconditioning is large, even in a case to which a prior art iterative method cannot be applied because bad convergence to a solution is unavoidable, as the incase of simulation of a shell structure, an iterative method can be applied to such a case by applying the present invention. In other words, even in the case of calculations with a normal workstation and a personal computer neither of which is a parallel computer, by using the present invention, it is possible to improve convergence properties of a solution in an iterative method having the advantage of memory saving.

It will be appreciated that various aspects of the invention may be embodied on a computer that is running a program or program segments originating from a computer readable or usable medium, such medium including but not limited to magnetic storage media (e.g. ROMs, floppy disks, hard disks, etc.) optically readable media (e.g. CD-ROMs, DVDs, etc.) and carrier waves (e.g., transmissions over the Internet). A functional program, code and code segments, used to implement the present invention can be derived by a skilled computer programmer from the description of the invention contained herein.

In the specification the terms "comprise, comprises, comprised and comprising" or any variation thereof and the terms "include, includes, included and including" or any variation thereof are considered to be totally interchangeable and they should all be afforded the widest possible interpretation.

The invention is not limited to the embodiments hereinbefore described but may be varied in both construction and detail.

**Claims**

1. A computing apparatus for solving simultaneous linear equations including data input means into which input information as to a coefficient matrix A of simultaneous linear equations, preconditioning means which finds a preconditioned matrix C relative to the coefficient matrix A, computation means which solves the simultaneous linear equations by using the inputted coefficient matrix A and values of the found preconditioned matrix C, and an output means which outputs the computation result, **characterised in that** the preconditioning means includes a first processing part which decomposes the coefficient matrix A into submatrices D, a second processing means which calculates norms of the decomposed submatrices D, a third processing means which stores the positions of elements which constitute the one of the submatrices D whose calculated norm is greater than the value of a preset norm, a fourth processing means which adds, to a matrix S formed on the basis of the positions of the stored elements, position information as to matrix elements which change from zero to nonzero when the matrix S is computed, and a fifth processing means which finds the preconditioned matrix C by computing the added matrix.

**2.** A computing apparatus for solving simultaneous linear equations including data input means into which input information as to a coefficient matrix A of simultaneous linear equations, preconditioning means which finds an approximate matrix $C^{-1}$ of the inverse matrix of the coefficient matrix A, a computation means which solves the simultaneous linear equations by using the inputted coefficient matrix A and the found approximate matrix $C^{-1}$, and output means which outputs the computation result, **characterised in that** the preconditioning means includes:

a first computation means which deletes elements whose computed values are smaller than a previously stored set value, from submatrices D which constitute the matrix of the coefficient matrix A, and forms a sparse pattern equivalent to a second matrix;

a second computation means which adds, to the sparse pattern, elements which change from zero to nonzero when the second matrix is computed, and forms a second sparse pattern; and

a third computation means which finds the approximate matrix $C^{-1}$ by using the second sparse pattern.

**3.** A computing apparatus for solving simultaneous equations which calculates a preconditioned matrix C relative to a coefficient matrix A of the simultaneous equations, **characterised by** means for storing the coefficient matrix A, the resultant preconditioned matrix C and intermediate calculation results, means for decomposing the coefficient matrix A into a set of submatrices D while referring to the storage means, calculating norms from elements of the submatrices D and storing the positions of only submatrices whose calculated norms are greater than a preset value, means for calculating the positions of the elements of the submatrices D that change from zero to nonzero by the influence of originally nonzero elements in the case of performing triangular decomposition to decompose a matrix S indicative of the positions into the product of a lower triangular matrix L where elements above diagonal entries are zero and an upper triangular matrix U where elements below diagonal entries are zero, and storing a result obtained by adding the position information as to the elements of the submatrices D to the matrix S indicative of the positions, and processing means for performing incomplete triangular decomposition by using a nonzero submatrix indicated by a matrix S' indicative of positions which reflect the added result.

**4.** A computing apparatus for solving simultaneous equations according to claims 1 to 3, **characterised in that** the submatrices D have a size selected from among $1 \times 1$, $2 \times 2$ and $3 \times 3$.

**5.** A computing apparatus for solving simultaneous equations according to claims 1 to 3, **characterised in that** the set value relative to the submatrices D is 0.05 or more and 0.25 or less.

**6.** A computing apparatus for solving simultaneous linear equations according to claims 1 to 3, **characterised in that** the simultaneous equations are formed in numerical simulation based on a finite element method, or simultaneous linear equations formed in numerical simulation based on a difference method.

**7.** A computer-readable recording medium on which is recorded a program which executes a preconditioning step of finding a preconditioned matrix C relative to a coefficient matrix A of inputted simultaneous linear equations on the basis of data as to the coefficient matrix A, a computation step of solving the simultaneous linear equations by using the inputted coefficient matrix A and values of the found preconditioned matrix C, and an output step of outputting the computation result, **characterised in that** the preconditioning step executes a step of decomposing the coefficient matrix A into submatrices D, a step of calculating norms of the decomposed submatrices D, a step of storing the positions of elements which constitute the one of the submatrices D whose calculated norm is greater than the value of a preset norm, a step of adding, to a matrix S formed on the basis of the positions of the stored elements, position information as to matrix elements which change from zero to nonzero when the matrix S is computed, and a step of finding the preconditioned matrix C by computing the added matrix.

**8.** A data processing method which includes a preconditioning step of finding a preconditioned matrix C relative to a coefficient matrix A of inputted simultaneous linear equations on the basis of data as to the coefficient matrix A, a computation step of solving the simultaneous linear equations by using the inputted coefficient matrix A and values of the found preconditioned matrix C, and an output step of outputting the computation result, **characterized in that** the preconditioning step includes a step of decomposing the coefficient matrix A into submatrices D, a step of calculating norms of the decomposed submatrices D, a step of storing the positions of elements which constitute the one of the submatrices D whose calculated norm is greater than the value of a preset norm, a step of adding, to a matrix S formed on the basis of the positions of the stored elements, position information as to matrix elements which change from zero to nonzero when the matrix S is computed, and a step of finding the preconditioned matrix C by computing the added matrix.

**9.** A computer program comprising program instructions for causing a computer to perform the data processing method of claim 8.

**10.** A computer program according to claim 9 embodied on a recordable medium.

**11.** A computer program according to claim 9 stored in a computer memory.

**12.** A computer program according to claim 9 embodied in a read-only memory.

**13.** A computer program according to claim 9 carried on an electrical carrier signal.

**14.** A computer program according to claim 9 carried on an optical carrier signal.

Fig. 1

Fig. 2

EXECUTE SCALING — 100

DEFINE INITIAL
SPARSE PATTERN — 101

DECOMPOSE SPARSE PATTERN
INTO SUB MATRICES OF 3 x 3 — 102

DELETE SUB MATRICES WHOSE NORMS
ARE GREATER THAN OR EQUAL TO
PREDETERMINE VALUE, FROM SPARSE PATTERN — 103

ADD PRIMARY FILL-IN TO SPARSE PATTERN — 104

Fig. 3

```
┌─────────────────────────┐      ┌──────────────────────┐      ┌──────────────────────────┐
│ INPUT DATA STORAGE      │◁─────│ INPUT DATA (PARENT)  │◁─────│ EXTERNAL STORAGE DEVICE  │
│ DEVICE (PARENT)         │      │                      │      │ INPUT DATA               │
└─────────────────────────┘      └──────────────────────┘      └──────────────────────────┘
            │                               │
            ▽              ┌──────────────────────────────┐        INPUT DATA
┌─────────────────────────┐│ DETERMINE SUBDOMAIN TO BE   │   (SHAPE, LOAD, CONSTRAINT, MATERIAL)
│ INPUT DATA STORAGE      │◁│ HANDLEDED BY CHILD          │◁──────
│ DEVICE (CHILD)          │ │ PROCESSORS (PARENT)         │
└─────────────────────────┘ └──────────────────────────────┘
            │                                       ┌──────────────────────────┐
            ▽                                       │ TRANSFER DATA TO CHILD   │
┌─────────────────────────┐                         │ PROCESSORS (PARENT)      │
│ COEFFICIENT MATRIX      │◁───────────────────     └──────────────────────────┘
│ STORAGE DEVICE (CHILD)  │                                      │
└─────────────────────────┘                                     ▽
            │                                       ┌──────────────────────────┐
            ▽                                       │ FORM COEFFICIENT MATRICES│
┌─────────────────────────┐                         │ IN CHILD PROCESSORS      │
│ SPARSE PATTERN STORAGE  │◁───────────────────     │ (CHILD)                  │
│ DEVICE (PARENT)         │                         └──────────────────────────┘
└─────────────────────────┘                                     │
            │                                                    ▽
            ▽                                       ┌──────────────────────────┐
┌─────────────────────────┐                         │ GENERATE SPARSE PATTERN  │
│ SPARSE PATTERN STORAGE  │◁───────────────────     │ (PARENT)                 │
│ DEVICE (CHILD)          │                         └──────────────────────────┘
└─────────────────────────┘                                     │
            │                                                    ▽
            ▽                                       ┌──────────────────────────┐
┌─────────────────────────┐                         │ TRANSFER SPARSE PATTERN  │
│ STORAGE DEVICE (CHILD)  │◁───────────────────     │ TO CHILD PROCESSORS      │
│ FOR APPROXIMATION       │                         │ (PARENT)                 │
│ INVERSE MATRIX G        │                         └──────────────────────────┘
└─────────────────────────┘                                     │
            │                                                    ▽
            ▽                                       ┌──────────────────────────┐
┌─────────────────────────┐                         │ CALCULATE EACH ROW OF    │
│ APPROXIMATION INVERSE   │◁───────────────────     │ APPROXIMATE INVERSE      │
│ MATRIX G STORAGE        │                         │ MATRIX G OF LOWER        │
│ DEVICE (PARENT)         │                         │ TRIANGULAR MATRIX (CHILD)│
└─────────────────────────┘                         └──────────────────────────┘
            │                                                    │
            ▽                                                    ▽
     ( TO FIG 4(B). )                               ┌──────────────────────────┐
                                                    │ TRANSFER EACH ROW OF     │
                                                    │ APPROXIMATE INVERSE      │
                                                    │ MATRIX G TO PARENT       │
                                                    │ PROCESSOR (CHILD)        │
                                                    └──────────────────────────┘
                                                                 │
                                                                 ▽
                                                          ( TO FIG 4(B). )
```

Fig. 4(A)

EP 1 205 850 A2

FROM FIG 4(A).

CALCULATE PRECONDITIONING MATRIX$^{-1}$ (PARENT)

CALCULATE CONGUATE GRADIENT METHOD (PARENT)

TRANSFER NODAL DISPLACEMENT AND NODAL REACTION TO CHILD PROCESSORS (PARENT)

CALCULATE STRESSES AND STRAINS IN SUBDOMAIN (CHILD)

TRANSFER STRESSES AND STRAINS OF SUBDOMAIN TO PARENT PROCESSOR (CHILD)

TRANSFER ANALYSIS RESULT TO EXTERNAL STORAGE DEVICE (PARENT)

OUTPUT DATA (DISPLACEMENT, REACTION, STRESS, STRAIN)

FROM FIG 4(A).

PRECONDITIONING MATRIX C$^{-1}$ STORAGE DEVICE (PARENT)

CALCULATION OF $\hat{p}$ (CHILD)

DISPLACEMENT AND REACTION STORAGE DEVICE (CHILD)

DISPLACEMENT AND REACTION STORAGE DEVICE (PARENT)

STRESS AND STRAIN STORAGE DEVICE (CHILD)

STRESS AND STRAIN STORAGE DEVICE (PARENT)

Fig. 4(B)

23

Fig. 5

Fig. 6

5

DATA INPUT PART 1

PRECONDITIONING PART 2

COMPUTING PART 3

COMPUTATION RESULT OUTPUT PART 4

STORAGE PART 5

INPUT DATA

Fig. 7(A)

11

STORAGE PART 5

FIRST PROCESSING PART
DECOMPOSITION OF COEFFICIENT MATRIX A INTO SUBMATRICES D 6

SECOND PROCESSING PART
CALCULATION OF NORMS OF SUBMATRICES D 7

THIRD PROCESSING PART
COMPARISON 8

FOURTH PROCESSING PART
ADDITION OF ELEMENTS OF ZERO --> NONZERO 9

FIFTH PROCESSING PART
COMPUTATION OF PRECONDITIONED MATRIX 10

Fig. 7(B)

INPUTTING OF DATA

CALCULATE ELEMENT STIFFNESS MATRIX

ASSEMBLE GLOBAL STIFFNESS MATRIX

CALCULATE GLOBAL STIFFNESS MATRIX

CALCULATE STRESS AND STRAIN OF EACH ELEMENT

OUTPUT RESULT FILE

INPUT DATA

OUTPUT DATA

Fig. 8

RECORDING MEDIUM

HARD DISK

PARENT PROCESSOR

MEMORY

CHILD PROCESSOR

CHILD PROCESSOR

CHILD PROCESSOR

MEMORY

MEMORY

MEMORY

Fig. 9

Fig. 10

Fig. 11

Fig. 12

Fig. 13

NON-ZERO PORTION

Fig. 14

EXECUTE SCALING

DEFINE INITIAL SPARSE PATTERN
$S_L = \{(i,j) : K_{ij} \neq 0, i \geq j\}$

DECOMPOSE SPARSE PATTERN INTO SUB MATRICES OF 2 x 2

DELETE SUB MATRICES WHOSE NORMS ARE GREATER THAN OR EQUAL TO PREDETERMINED VALUE, FROM SPARSE PATTERN

ADD PRIMARY FILL-IN SPARSE PATTERN

Fig. 15

Scaling only

Original FSAI

This invention

Fig. 16